# EUROPÄISCHE PATENTSCHRIFT

(11) **EP 1 891 163 B1**
(45) Veröffentlichungstag und Bekanntmachung des Hinweises auf die Patenterteilung: **01.04.2009**
(21) Anmeldenummer: 06753464.4
(22) Anmeldetag: 29.04.2006
(51) Int. Cl.: C09B 67/22

(54) **BLAUES FARBMITTEL AUF BASIS VON C.I. PIGMENT BLUE 80**
C.I. PIGMENT BLUE 80-BASED BLUE DYE
COLORANT BLEU A BASE DE PIGMENT A INDICE DE COULEUR BLEU 80

(30) Priorität: 31.05.2005 DE 102005024722
(43) Veröffentlichungstag der Anmeldung: 27.02.2008
(73) Patentinhaber: Clariant Produkte (Deutschland) GmbH, 65929 Frankfurt am Main (DE)
(72) Erfinder: KEMPTER, Peter, 4313 Möhlin (CH); ANTES, Sven, 65795 Hattersheim (DE); GRAF, Herbert, 63110 Rodgau (DE); MEDER, Magali, 79639 Grenzach-Wyhlen (DE)
(74) Vertreter: Hütter, Klaus
(86) Internationale Anmeldenummer: PCT/EP2006/004055
(87) Internationale Veröffentlichungsnummer: WO 2006/128539

(56) Entgegenhaltungen:
- EP-A1- 0 504 923
- EP-A2- 1 046 680
- EP-A2- 1 046 681
- EP-A2- 1 120 420
- WO-A1-20/04050770
- WO-A2-02/053654
- DE-A1- 4 442 291
- DATABASE WPI Week 200522 Derwent Publications Ltd., London, GB; AN 2005-204847 XP002408997 -& JP 2005 049636 A (TOPPAN PRINTING CO LTD) 24. Februar 2005 (2005-02-24) in der Anmeldung erwähnt

## Beschreibung

Die vorliegende Erfindung betrifft eine Pigmentzubereitung auf Basis von Benzimidazolondioxazin-Pigment (C.I. Pigment Blue 80) und einem spezifischen Dispergator auf Basis eines substituierten Pigment Violett 23.
Die erfindungsgemäße Pigmentzubereitung lässt sich in hochpolaren, wässrigen Lacken auf Polyurethanbasis sowie in lösungsmittelarmen High-Solid-Acrylharzlacken mit hohem Festkörperanteil einsetzen. Geeignet sind auch Lacksysteme aus der Klasse der Alkydmelaminharzlacke und Zweikomponentenlacke auf Basis von mit Polyisocyanat vernetzbaren Acrylharzen. Weitere Anwendungsgebiete sind Effektlacke im Automobilsektor, Industrielacke, insbesondere Color Filter, Ink Jet Tinten, elektrophotographische Toner und Entwickler, und e-inks.

Pigmentzubereitungen sind Kombinationen von Basispigmenten und Pigmentdispergatoren, das sind mit spezifisch wirksamen Gruppen substituierte Pigmente. Die Pigmentdispergatoren werden den Pigmenten zugesetzt, um die Dispergierung in den Anwendungsmedien, insbesondere für Lacke, Druckfarben und Colorfilter zu erleichtern und um die rheologischen und coloristischen Eigenschaften der Pigmente zu verbessern. Die Viskosität der hochpigmentierten Farbkonzentrate (Millbase) wird erniedrigt und die Flockung der Pigmentteilchen vermindert. Dadurch kann beispielsweise die Farbstärke, die Transparenz und der Glanz erhöht werden. Dies ist insbesondere bei Metallic-Lacken und Color Filtern erwünscht.

Bei Color Filtern (Farbfilter) wird mittels Durchlicht von roten, grünen und blauen Bildpunkten ein Vollfarbbild erzeugt. Neben den "transmissive" (or "non-emissive") (= Durchlicht) Color Filtern gibt es auch "reflective" Color Filter, die dann gegebenenfalls auch mit gelb, cyan und magenta Bildpunkten arbeiten können.

Bei den Color Filtern unterscheidet man zwischen AM-(active matrix) und PM-(passive matrix) LCD (liquid crystal display) Color Filtern, wobei den TFT (thin film transistor)-LCD Color Filtern eine besondere Bedeutung zukommt.
Darüber hinaus können Color Filter auch bei MEMS (DMD) (= Micro-Electro-Mechanical Systems, Digital Micro Mirror Device), bei e-paper sowie weiteren geeigneten Display Technologien Einsatz finden.
Color Filter Displays finden in den unterschiedlichsten electro-optischen Systemen Anwendung, wie z.B. in Bildschirmen von Desk-Top Monitoren, in Computerbildschirmen, Bildschirmen von tragbaren Computern (Laptops, portable computers), PDA (Personal Digital Assistants) sowie in Mobiltelefon-, Videokamera-, GPS- (global positioning systems) und sonstigen Monitoren, sowie generell in Flüssigkristall- und Charge-Coupled-Devices, plasma displays oder in electroluminiscenten und anderen Displays. Letztgenannte können z.B. active (twisted nematic) oder passive (supertwisted nematic) ferroelektrische Displays sein oder z.B. Licht emittierende Dioden.
Zudem finden Farbfilter Einsatz in Flat Panel Displays (Flachbildschirmen), die zunehmend die herkömmlichen Kathodenstrahl-Fernsehbildschirme ersetzen, oder die generell als Anzeigetafel in beliebiger Größe für unbewegte und bewegte Information genutzt werden können.

Ein typischer LCD-Color-Filter Aufbau kann wie folgt schematisch beschrieben werden: Zwischen zwei Glasplatten befindet sich eine dünne Schicht mit Flüssigkristallen. Die obere Glasplatte hat neben einer Reihe von weiteren funktionalen Komponenten auf der äußeren Oberfläche die entsprechenden Bildpunkte, z.B. Rot, Grün, Blau ( R,G,B). Diese Bildpunkte sind für einen besseren Kontrast schwarz umrandet, nach außen sind die R, G, B -Bildpunkte durch eine geeignete Schutzschicht gegen Umwelteinflüsse, wie Kratzer, geschützt. Die untere Glasplatte enthält noch weitere funktionale Komponenten wie z.B. ITO (Indium Tin Oxide) und TFT (Thin Film Transistors), die unter anderem zum Ansteuern der einzelnen Bildpunkte dienen.
Wird durch die untere Glasplatte geeignetes Licht (z.B. linear polarisiertes Licht einer bestimmten Wellenlänge) geschickt, so kann der Flüssigkristall durch elektronisches Ansteuern auf "hell" oder "dunkel" gestellt werden (öder auf jede beliebige Zwischenstufe).
Dementsprechend werden die Color Filter-Bildpunkte mit Licht versorgt und für das menschliche Auge ergibt sich ein entsprechendes auf R, G, B aufbauendes, farbiges, bewegtes oder unbewegtes Bild.

Ganz besondere Anforderungen werden bei den Color Filter-Materialien an die eingesetzten Farbmittel gestellt.
Als wichtigste technische Parameter, die erfüllt sein müssen, lassen sich nennen:
- hohe Thermostabilität: während des Herstellvorganges eines Color Filters werden die einzelnen aufgetragenen Schichten erhitzt, so dass die Pigmentzubereitung für bis zu 1 Stunde Temperaturen bis zu 300°C aushalten muss;
- gute Dispergierbarkeit in Color Filter Systemen;
- steile und schmale Absorptionsbanden der jeweils aufgebrachten Color Filter Schicht;
- hoher Kontrast;
- eine gute und stabile Viskosität im Color Filter Medium: Eine zu hohe Viskosität verhindert die gleichmäßige Verteilung der Flüssigkeit auf dem Glassubstrat und beeinträchtigt dadurch die Qualität des Bildes;
- ökotoxikologische Unbedenklichkeit beim Verarbeiten;
- nicht flokkulierendes Verhalten
- eine möglichst glatte (= nicht rauhe) Oberfläche der aufgebrachten (pigmentierten) Color Filter
- Säurebeständigkeit (für z.B. Etchingverfahren)
- Lösemittelechtheit.

Die bekannten Pigmente und Pigmentzubereitungen genügen nicht immer allen Anforderungen der Technik. Insbesondere für Blaupigmente bestand ein Verbesserungsbedarf hinsichtlich der Farbstärke, Farbtonreinheit, Transparenz, Rheologie und Glanz.

Ziel der vorliegenden Erfindung war, ein hochtransparentes Farbmittel mit rotstichigem Blaufarbton insbesondere für den Einsatz von Effektlacken im Automobilbau sowie Industrielacken, Color Filtern, Ink Jet Tinten, elektrophotographischen Tonern und Entwicklern und e-inks zur Verfügung zu stellen.

Die Aufgabe wurde überraschenderweise durch nachstehende Pigmentzubereitung gelöst.

Gegenstand der vorliegenden Erfindung ist eine Pigmentzubereitung, gekennzeichnet durch einen Gehalt an
a) einer Benzimidazolondioxazinverbindung der Formel (I) als Basispigment 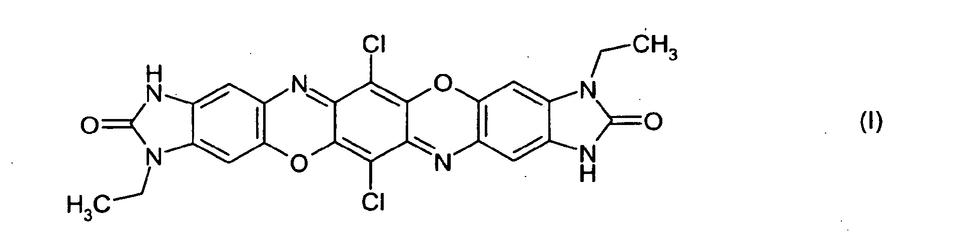 und
b) einer Dioxazinverbindung der allgemeinen Formel (IV) als Pigmentdispergator 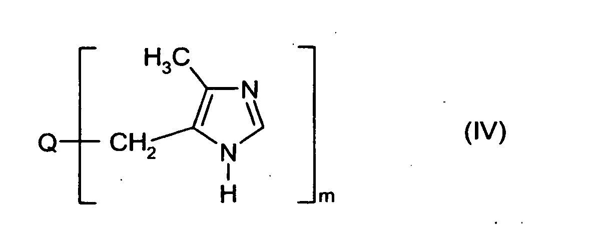
worin
- Q: für einen m-wertigen Rest einer Verbindung der Formel (III) steht, 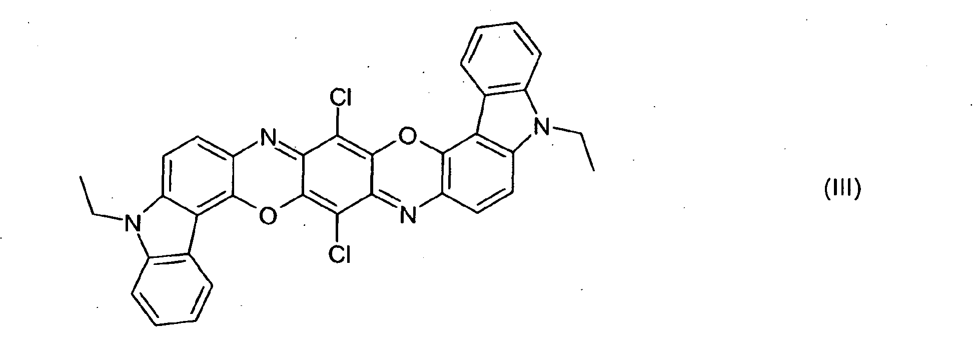
- m: eine Zahl von 1 bis 4, vorzugsweise 1 bis 3, insbesondere 1 bis 2, ist.

Die erfindungsgemäße Pigmentzubereitung enthält zweckmäßigerweise 0,5 bis 99 Gew.-%, bevorzugt 1 bis 75 Gew.-%, insbesondere 2,5 bis 50 Gew.-%, ganz besonders bevorzugt 5 bis 30 Gew.-%, an Pigmentdispergator der Formel (IV), bezogen auf das Gewicht des Basispigments der Formel (I).

Das Pigment der Formel (I) ist als C.I. Pigment Blue 80 bekannt (DE-A-44 42 291). Die Verbindung der Formel (IV) ist aus der EP-0 504 923 B1 bekannt.

Gegenstand der Erfindung ist auch ein Verfahren zur Herstellung einer erfindungsgemäßen Pigmentzubereitung, dadurch gekennzeichnet, dass man den Pigmentdispergator der Formel (IV) und die Benzimidazolondioxazinverbindung der Formel (I) miteinander mischt oder an einem beliebigen Zeitpunkt ihres Herstellungsprozesses aufeinander einwirken lässt.
Bevorzugt wird die Pigmentzubereitung durch Mahlung der Komponenten in trockener Form, in feuchter Form oder in Suspension hergestellt.
Des weiteren ist ein bevorzugtes Herstellungsverfahren die Zugabe des Pigmentdispergators zum Benzimidazolondioxazinpigment während der Mahlung oder unmittelbar vor einem Finish.
Eine dritte Herstellvariante ist das Mischen in trockener Form vor einer Pulverisierung.
Beispielsweise können die trockenen Komponenten in Granulat- oder Pulverform vor oder nach einer Mahlung gemischt werden; die eine Komponente kann zur anderen Komponente in feuchter oder trockener Form zugegeben werden, beispielsweise durch Mischen der Komponenten in Form der feuchten Presskuchen.
Das Mischen kann beispielsweise durch eine Mahlung in trockener Form, in feuchter Form, beispielsweise durch Knetung, oder in Suspension erfolgen, oder durch eine Kombination dieser Verfahren. Die Mahlung kann unter Zusatz von Wasser, Lösemitteln, Laugen oder Mahlhilfsmitteln wie Salz durchgeführt werden. Besonders bevorzugt ist die Perlmahlung bei einem pH zwischen 7,0 und 12,0. Das bei der chemischen Synthese gewöhnlicherweise grobkristallin anfallende Benzimidazolondioxazin-Rohpigment wird zerkleinert, beispielsweise durch Trocken- oder Nassmahlung. Die dabei gebildeten feinkristallinen Benzimidazolondioxazine werden einer Nachbehandlung, im allgemeinen als Finish bezeichnet, unterworfen, beispielsweise in Wasser und/oder Lösemitteln und meist unter erhöhter Temperatur, beispielsweise bis 200°C, und ggf. erhöhtem Druck. Selbstverständlich kann der Pigmentdispergator auch in Teilportionen zu unterschiedlichen Zeiten zugegeben werden.

Die erfindungsgemäße Pigmentzubereitung kann als vorzugsweise wässriger Presskuchen oder Feuchtgranulat zum Einsatz kommen, in der Regel handelt es sich jedoch um feste Systeme von rieselfähiger, pulverförmiger Beschaffenheit oder um Granulate.

Bei der Trocknung einer feuchten Pigmentzubereitung können die bekannten Trockenaggregate zum Einsatz kommen, wie Trockenschränke, Schaufelradtrockner, Taumeltrockner, Kontakttrockner und insbesondere Spinflash- und Sprühtrockner. Durch die Wahl eines geeigneten Trockenaggregates können auch staubarme und rieselfähige Pulver oder Granulate erzeugt werden.

Die erfindungsgemäßen Pigmentzubereitungen können neben dem Benzimidazolondioxazinpigment und dem Pigmentdispergator noch weitere übliche Hilfsmittel oder Zusatzstoffe enthalten, wie beispielsweise Tenside, nichtpigmentäre und pigmentäre Dispergiermittel, Füllstoffe, Stellmittel, Harze, Wachse, Entschäumer, Antistaubmittel, Extender, Antistatika, Farbmittel zum Nuancieren, beispielsweise P.V. 23, Konservierungsmittel, Trocknungsverzögerungsmittel, Additive zur Steuerung der Rheologie, Netzmittel, Antioxidantien, Biocide, UV-Absorber und Lichtstabilisatoren, vorzugsweise in einer Menge von 0,1 bis 60 Gew.-%, insbesondere 0,5 bis 35 Gew.-%, bezogen auf das Gesamtgewicht der Pigmentzubereitung.
Als Tenside kommen anionische oder anionaktive, kationische oder kationaktive und nichtionische oder amphotere Substanzen oder Mischungen dieser Mittel in Betracht.

Als anionaktive Substanzen kommen beispielsweise Fettsäuretauride, FettsäureN-methyltauride, Fettsäureisethionate, Alkylphenylsulfonate, beispielsweise Dodecylbenzolsulfonsäure, Alkylnaphthalinsulfonate, Alkylphenolpolyglykolethersulfate, Fettalkoholpolyglykolethersulfate, Fettsäureamid-polyglykolethersulfate, Alkylsulfosuccinamate, Alkenylbernsteinsäurehalbester, Fettalkoholpolyglykol-ethersulfosuccinate, Alkansulfonate, Fettsäureglutamate, Alkylsulfosuccinate, Fettsäuresarkoside; Fettsäuren, beispielsweise Palmitin-, Stearin- und Ölsäure; die Salze dieser anionischen Substanzen und Seifen, beispielsweise Alkalisalze von Fettsäuren, Naphthensäuren und Harzsäuren, beispielsweise Abietinsäure, alkalilösliche Harze, beispielsweise kolophoniummodifizierte Maleinatharze und Kondensationsprodukte auf Basis von Cyanurchlorid, Taurin, N,N'-Diethylaminopropylamin und p-Phenylendiamin in Betracht. Bevorzugt sind Kondensationsprodukte auf Basis von Cyanurchlorid, Taurin, N,N'-Diethylaminopropylamin und p-Phenylendiamin.

Als kationaktive Substanzen kommen beispielsweise quaternäre Ammoniumsalze, Fettaminoxalkylate, Polyoxyalkylenamine, oxalkylierte Polyamine, Fettaminpolyglykolether, primäre, sekundäre oder tertiäre Amine, beispielsweise Alkyl-, Cycloalkyl oder cyclisierte Alkylamine, insbesondere Fettamine, von Fettaminen oder Fettalkoholen abgeleitete Di- und Polyamine und deren Oxalkylate, von Fettsäuren abgeleitete Imidazoline, Polyaminoamido- oder Polyaminoverbindungen oder -harze mit einem Aminindex zwischen 100 und 800 mg KOH pro Gramm der Polyaminoamido- oder Polyaminoverbindung, und Salze dieser kationenaktiven Substanzen, wie beispielsweise Acetate oder Chloride, in Betracht.

Als nichtionogene und amphotere Substanzen kommen beispielsweise Fettamincarboxyglycinate, Aminoxide, Fettalkoholpolyglykolether, Fettsäurepolyglykolester, Betaine, wie Fettsäureamid-N-propyl-betaine, Phosphorsäureester von aliphatischen und aromatischen Alkoholen, Fettalkoholen oder Fettalkoholpolyglykolethern, Fettsäureamidethoxylate, Fettalkoholalkylenoxid-Addukte und Alkylphenolpolyglykolether in Betracht.

Mit nichtpigmentären Dispergiermitteln sind Substanzen gemeint, die strukturell nicht von organischen Pigmenten abgeleitet sind. Sie werden als Dispergiermittel entweder bereits bei der Herstellung von Pigmenten, oft aber auch bei der Einarbeitung der Pigmente in die zu färbenden Anwendungsmedien, beispielsweise bei der Herstellung von Lacken oder Druckfarben durch Dispergierung der Pigmente in den entsprechenden Bindemitteln, zugegeben. Es können polymere Substanzen sein, beispielsweise Polyolefine, Polyester, Polyether, Polyamide, Polyimine, Polyacrylate, Polyisocyanate, Blockcopolymere daraus, Copolymere aus den entsprechenden Monomeren oder Polymere einer Klasse, die mit wenigen Monomeren einer anderen Klasse modifiziert sind. Diese polymeren Substanzen tragen polare Ankergruppen wie beispielsweise Hydroxy-, Amino-, Imino- und Ammoniumgruppen, Carbonsäure- und Carboxylatgruppen, Sulfonsäure- und Sulfonatgruppen oder Phosphonsäure- und Phosphonatgruppen, und können auch mit aromatischen, nicht pigmentären Substanzen modifiziert sein. Nichtpigmentäre Dispergiermittel können des Weiteren auch chemisch mit funktionellen Gruppen modifizierte aromatische, nicht von organischen Pigmenten abgeleitete Substanzen sein. Derartige nichtpigmentäre Dispergiermittel sind dem Fachmann bekannt und zum Teil im Handel erhältlich (z.B. Solsperse^{®}, Avecia; Disperbyk^{®}, Byk-Chemie, Efka^{®}, Efka). Es sollen im Folgenden stellvertretend einige Typen genannt werden, zum Einsatz können jedoch prinzipiell beliebige andere, beschriebene Substanzen kommen, beispielsweise Kondensationsprodukte aus Isocyanaten und Alkoholen, Di- oder Polyolen, Aminoalkoholen oder Di- oder Polyaminen, Polymere aus Hydroxycarbonsäuren, Copolymere aus Olefinmonomeren oder Vinylmonomeren und ethylenisch ungesättigten Carbonsäuren und -estern, urethanhaltige Polymere von ethylenisch ungesättigten Monomeren, urethanmodifizierte Polyester, Kondensationsprodukte auf Basis von Cyanurhalogeniden, Nitroxylverbindungen enthaltende Polymere, Polyesteramide, modifizierte Polyamide, modifizierte Acrylpolymere, Dispergiermittel mit kammartiger Struktur aus Polyestern und Acrylpolymeren, Phosphorsäureester, von Triazin abgeleitete Polymere, modifizierte Polyether, oder von aromatischen, nichtpigmentären Substanzen abgeleitete Dispergiermittel. Dabei werden diese Grundstrukturen vielfach weiter modifiziert, beispielsweise durch chemische Umsetzung mit weiteren, funktionelle Gruppen tragenden Substanzen oder durch Salzbildung.

Anionische Gruppen der als Hilfsmittel eingesetzten nichtpigmentären und pigmentären Dispergatoren, Tenside oder Harze können auch verlackt werden, beispielsweise durch Ca-, Mg-, Ba-, Sr-, Mn- oder Al-Ionen oder durch quaternäre Ammoniumionen.

Mit Füllstoffe bzw. Extender sind eine Vielzahl von Substanzen gemäß DIN 55943 und DIN EN 971-1 gemeint, beispielsweise die verschiedenen Typen von Talk, Kaolin, Glimmer, Dolomit, Kalk, Bariumsulfat oder Titandioxid. Dabei hat sich die Zugabe besonders vor der Pulverisierung der getrockneten Pigmentzubereitung bewährt.

Gegenstand der Erfindung ist auch die Verwendung der erfindungsgemäßen Pigmentzubereitung zum Pigmentieren von hochmolekularen organischen Materialien, beispielsweise von Kunststoffen, Harzen, Lacken, Pulverlacken, Anstrichfarben, Elektretmaterialien, Druckfarben und Saatgut, insbesondere aber für Effektlackierungen, Automobillacke, Industrielacke, Color Filter, Ink Jet Tinten, elektrophotographische Toner und Entwickler und e-inks.

Hochmolekulare organische Materialien, die mit der erfindungsgemäßen Pigmentzubereitung pigmentiert werden können, sind beispielsweise Celluloseverbindungen, wie beispielsweise Celluloseether und -ester, wie Ethylcellulose, Nitrocellulose, Celluloseacetate oder Cellulosebutyrate, natürliche Bindemittel, wie beispielsweise Fettsäuren, fette Öle, Harze und deren Umwandlungsprodukte, oder Kunstharze, wie Polykondensate, Polyaddukte, Polymerisate und Copolymerisate, wie beispielsweise Aminoplaste, insbesondere Harnstoff- und Melaminformaldehydharze, Alkydharze, Acrylharze, Phenoplaste und Phenolharze, wie Novolake oder Resole, Harnstoffharze, Polyvinyle, wie Polyvinylalkohole, Polyvinylacetale, Polyvinylacetate oder Polyvinylether, Polycarbonate, Polyolefine, wie Polystyrol, Polyvinylchlorid, Polyethylen oder Polypropylen, Poly(meth)acrylate und deren Copolymerisate, wie Polyacrylsäureester oder Polyacrylnitrile, Polyamide, Polyester, Polyurethane, Cumaron-Inden- und Kohlenwasserstoffharze, Epoxidharze, ungesättigte Kunstharze (Polyester, Acrylate) mit den unterschiedlichen Härtemechanismen, Wachse, Aldehyd- und Ketonharze, Gummi, Kautschuk und seine Derivate und Latices, Casein, Silikone und Silikonharze; einzeln oder in Mischungen.
Dabei spielt es keine Rolle, ob die erwähnen hochmolekularen organischen Verbindungen als plastische Massen, Schmelzen oder in Form von Spinnlösungen, Dispersionen, Lacken, Anstrichstoffen oder Druckfarben vorliegen. Je nach Verwendungszweck erweist es sich als vorteilhaft, die erfindungsgemäßen Pigmentzubereitungen als Blend oder in Form von Präparationen oder Dispersionen zu benutzen.

Gegenstand der vorliegenden Erfindung ist daher auch ein hochmolekulares organisches Material, enthaltend eine färberisch wirksame Menge einer erfindungsgemäßen Pigmentzubereitung.
Bezogen auf das zu pigmentierende, hochmolekulare organische Material setzt man die erfindungsgemäße Pigmentzubereitung meist in einer Menge von 0,01 bis 30 Gew.-%, vorzugsweise 0,1 bis 15 Gew.-%, ein.
Die rotstichigen Blaufarbtöne der erfindungsgemäßen Pigmentzubereitungen sind ganz besonders gut geeignet für den Color Filter Farbset Rot-Grün-Blau(R,G,B). Diese drei Farben liegen als getrennte Farbpunkte nebeneinander vor, und ergeben von hinten durchleuchtet ein Vollfarbbild.

Typische Farbmittel für den roten Farbpunkt sind Pyrrolopyrrol-, Chinacridon- und Azopigmente, wie z.B. P.R. 254, P.R. 209, P.R.175 und P.O. 38, einzeln oder gemischt. Für den grünen Farbpunkt werden typischerweise Phthalocyaninfarbmittel eingesetzt, wie z.B. P.G.36 und P.G.7. Bei Bedarf können den jeweiligen Farbpunkten noch weitere Farben zum Nuancieren zugemischt werden. Für den Rot- und Grünfarbton wird bevorzugt mit Gelb abgemischt, zum Beispiel mit P.Y. 138,139,150,151,180 und 213.

Die erfindungsgemäße Pigmentzubereitung zeichnet sich aus durch ihre hervorragenden coloristischen und rheologischen Eigenschaften, insbesondere hohe Flockungsstabilität, leichte Dispergierbarkeit, gute Rheologie, hohe Farbstärke, Transparenz und Sättigung (Chroma). Sie sind in vielen Anwendungsmedien leicht und bis zu hohen Feinheiten dispergierbar. Auch andere Eigenschaften, wie beispielsweise Glanz, Überlackierechtheit, Lösemittelechtheit, Säureechtheit, Licht- und Wetterechtheiten und hohe Reinheit des Farbtons, sind sehr gut. Außerdem lassen sich mit den erfindungsgemäßen Pigmentzubereitungen Farbtöne im rotstichig-blauen Bereich erzielen, die beim Einsatz in Farbfiltern gefragt sind. Hier sorgen sie für hohen Kontrast und genügen auch den sonstigen, beim Einsatz in Color Filtern gestellten Anforderungen, wie hohe Temperaturstabilität oder steile und schmale Absorptionsbanden. Sie können mit hoher Reinheit und niedrigen Gehalten an Ionen hergestellt werden.

Die Herstellung der Colorfilter kann nach üblichen Verfahren erfolgen:
Die erfindungsgemäße Pigmentzubereitung wird in einem wässrigen oder nichtwässrigen System, das noch weitere Komponenten, wie z.B. Bindemittel, enthalten kann, dispergiert. Bindemittel können thermoplastisch, duroplastisch oder photoempfindlich sein. Beispiele von thermoplastischen und duroplastischen Bindemittel beinhalten Acrylate, Acrylester, Polyimide, Polyvinylalkohole, Epoxide, Polyester, Melamine, Gelatine, Caseine. Photoempfindliche Bindemittel sind an sich bekannt. Die so hergestellte Color Filter-Paste hat eine Konzentration an Pigmentzubereitung von 2,5 bis 80 Gew.-%.
Diese Dispersionen (Color-Filter-Pasten) können dann mittels Spincoating oder geeigneten konventionellen Druckverfahren (z.B. Flexo-, Offset-, Screen-, Intaglio- und Stempeldruck) oder berührungslosen Druckverfahren (z.B. Ink Jet) auf das Color Filter -Trägermaterial, typischerweise eine Glasplatte, aufgebracht werden. Die Bildpunkte können auch durch Thermosublimation, Thermotransfer, Electrodeposition oder anderen geeigneten Aufbringungsverfahren erzeugt werden.
Die typische Einsatzkonzentration der erfindungsgemäßen Pigmentzubereitungen im aufgebrachten Color Filter-Film liegt zwischen 5 und 95 Gew.-%, bevorzugt zwischen 20 und 80 Gew.-%, ganz besonders bevorzugt zwischen 40 und 60 Gew.-%, bezogen auf das Gesamtgewicht des Color Filter-Filmes.

Das am häufigsten angewandte Verfahren ist Spincoaten. Hierbei werden in geeigneten Photoresistsystemen nacheinander die Bildpunkte, z.B. R, G, B aufgebracht.
Eine aufgebrachte Photoresistschicht wird z.B. Strahlung ausgesetzt, anschließend entwickelt, so dass nur einzelne Bildpunkte der farbigen Schicht zurückbleiben.
Dieses Verfahren wird dann für weitere Farben wiederholt, so dass zum Schluss gleich große R, G, B- oder Y, M, C-Bildpunkte (Pixel) nebeneinander stehen.
Für die meisten Aufbringverfahren, wie z.B. das Photolithographische (Photoresisttechnologie) sind Lösemittel, bevorzugt organische Lösemittel, ein notwendiger Bestandteil. Grundsätzlich geeignet sind alle polaren oder unpolaren organischen Lösemittel, die je nach Aufbringverfahren noch weitere Eigenschaften wie Wasserverträglichkeit oder -unverträglichkeit, Temperaturstabilität oder sicherheits- und ecotox-relevante Aspekte erfüllen müssen.
Übliche Lösemittel sind Ethylcellosolveacetat, Diethylenglykolalkylether (z.B. Diethylenglykolmonoethylether, Diethylenglykoldimethylether), Propylenglykolalkyletheracetate (z.B. Propylenglykolmonomethyletheracetat), Ethylenglykolalkyletheracetate (z.B. Ethylenglykolmonoethyletheracetat), N-Methylpyrrolidon, Ketone (z.B. Methylethylketone, Cyclohexanon und Cyclopentanon), Alkohole, aromatische Kohlenwasserstoffe, Ester (z.B. Ethyl-3-ethoxypropionat), cyclische Ester.

Diese Lösemittel können einzeln oder in Kombination miteinander eingesetzt werden.

Die erfindungsgemäßen Pigmentzubereitungen sind auch geeignet als Farbmittel in elektrophotographischen Tonern und Entwicklern, wie beispielsweise Ein- oder Zweikomponentenpulvertonern (auch Ein- oder Zweikomponenten-Entwickler genannt), Magnettoner, Flüssigtoner, Latextoner, Polymerisationstoner sowie Spezialtoner. Tonerpartikel können auch für kosmetische und pharmazeutische Anwendungen, z.B. zum Coaten von Tabletten, verwendet werden. Typische Tonerbindemittel sind Potymerisations-, Polyadditions- und Polykondensationsharze, wie Styrol-, Styrolacrylat-, Styrolbutadien-, Acrylat-, Polyester-, Phenol-Epoxidharze, Polysulfone, Polyurethane, einzeln oder in Kombination, sowie Polyethylen und Polypropylen, die noch weitere Inhaltsstoffe, wie Ladungssteuermittel, Wachse oder Fließhilfsmittel, enthalten können oder im nachhinein mit diesen Zusätzen modifiziert werden.

Elektrophotographische Toner oder Entwickler enthalten ein übliches Tonerbindemittel und zwischen 0,1 und 80 Gew.-%, bevorzugt zwischen 1 und 40 Gew.-% und besonders bevorzugt zwischen 3 und 20 Gew.-% einer erfindungsgemäßen Pigmentzubereitung und zwischen 0 und 20 Gew.-%, bevorzugt zwischen 0,1 und 5 Gew.-%, jeweils bezogen auf das Gesamtgewicht des Toners oder Entwicklers, eines Ladungssteuermittel aus der Klasse der Triphenylmethane, Ammonium- und Immoniumverbindungen; fluorierten Ammonium- und Immoniumverbindungen; biskationischen Säureamide; polymeren Ammoniumverbindungen; Diallylammoniumverbindungen, Arylsulfid-Derivate, Phenolderivate, Phosphoniumverbindungen, und fluorierten Phosphoniumverbindungen; Calix(n)arene; Cyclodextrine; Polyestersalze; Metallkomplexverbindungen; Cyclooligosaccharid-Borkomplexe, Inter-Polyelektrolyt-Komplexe; Benzimidazolone; Azine, Thiazine oder Oxazine.

Elektrophotographische Toner können auch weiterhin noch Wachse enthalten. Des Weiteren können Wachse auch als vordispergiertes Konzentrat verwendet werden, wobei die Konzentrate (Masterbatch) Mehrkomponente sein können: Komponente sind die erfindungsgemäßen Farbmittel, Harze, Ladungssteuermittel und deren Kombinationen.

Außerdem sind die erfindungsgemäßen Pigmentzubereitungen geeignet als Farbmittel in Ink-Jet Tinten auf wässriger und nichtwässriger Basis, in Mikroemulsionstinten sowie in solchen Tinten, die nach dem Hot-melt-Verfahren arbeiten.
Ink-Jet-Tinten enthalten im Allgemeinen insgesamt 0,5 bis 25 Gew.-%, vorzugsweise 1,5 bis 8 Gew.-%, (trocken gerechnet) einer erfindungsgemäßen Pigmentzubereitung.
Mikroemulsionstinten basieren auf organischen Lösemitteln, Wasser und ggf. einer zusätzlichen hydrotropen Substanz (Grenzflächenvermittler). Mikroemulsionstinten enthalten im Allgemeinen 0,5 bis 15 Gew.-%, vorzugsweise 1,5 bis 8 Gew.-%, einer erfindungsgemäßen Pigmentzubereitung, 5 bis 99 Gew.-% Wasser und 0,5 bis 94,5 Gew.-% organisches Lösungsmittel und/oder hydrotrope Verbindung.
"Solvent based" Ink-Jet-Tinten enthalten vorzugsweise 0,5 bis 15 Gew.-% einer erfindungsgemäßen Pigmentzubereitung, 85 bis 99,5 Gew.-% organisches Lösungsmittel und/oder hydrotrope Verbindungen.

Hot-Melt-Tinten basieren meist auf Wachsen, Fettsäuren, Fettalkoholen oder Sulfonamiden, die bei Raumtemperatur fest sind und bei Erwärmen flüssig werden, wobei der bevorzugte Schmelzbereich zwischen ca. 60°C und ca. 140°C liegt. Hot-Melt Ink-Jet-Tinten bestehen z.B. im Wesentlichen aus 20 bis 90 Gew.-% Wachs und 1 bis 10 Gew.-% einer erfindungsgemäßen Pigmentzubereitung. Weiterhin können 0 bis 20 Gew.-% eines zusätzlichen Polymers (als "Farbstofflöser"), 0 bis 5 Gew.-% Dispergierhilfsmittel, 0 bis 20 Gew.-% Viskositätsveränderer, 0 bis 20 Gew.-% Plastifizierer, 0 bis 10 Gew.-% Klebrigkeitszusatz, 0 bis 10 Gew.-% Transparenzstabilisator (verhindert z.B. Kristallisation der Wachse) sowie 0 bis 2 Gew.-% Antioxidans enthalten sein. Weiterhin sind die erfindungsgemäßen Pigmentzubereitungen auch als Farbmittel für elektronische Tinten ("electronic inks" bzw. "e-inks") oder "electronic paper" ("e-paper") geeignet.

Die Mehrzahl heutiger Automobillackierungen sind so genannte Effekt-Beschichtungen. Dieser Effekt wird erzielt durch plättchenförmige metallische oder mineralische Pigmente und zeichnet sich durch einen vom Betrachtungswinkel abhängigen Helligkeits- oder Farbeindruck aus. Für die Kombination mit solchen "Effektpigmenten" ist es sinnvoll, solche organischen Pigmente auszuwählen, die den Metalleffekt nicht stören. Deshalb eignen sich hierfür in erster Linie transparente Pigmente, die das Licht nur wenig streuen: Je transparenter das organische Pigment, umso ausgeprägter der winkelabhängige Effekt der Effektpigmente in einer Beschichtung.
Da metallische Pastellfarbtöne immer beliebter werden und stark absorbierende Pigmente, wie z.B. Ruß, Blau, Violett und Grün ebenfalls den Metalleffekt abschwächen, werden sie oft in geringer Konzentration eingesetzt. Deshalb werden solche organischen Pigmente bevorzugt, die selbst in geringen Konzentrationen eine exzellente Wetterechtheit aufweisen und eine ausreichend hohe Farbstärke besitzen, um zu dem Metalleffekt einen Farbbeitrag zu leisten. Diese Forderung an organische Pigmente - hohe Farbstärke bei gleichzeitig hoher Wetterechtheit in geringer Einsatzkonzentration - schränkt die Auswahl an geeigneten Pigmenten stark ein, was in der Praxis zu Kompromissen in der Effektstärke oder in der Formulierung von Pastellfarbtönen führt.
Die erfindungsgemäße blaue Pigmentzubereitung erfüllt alle diese Forderungen in nahezu idealer Weise: Es ist transparent, extrem farbstark und dennoch in geringsten Konzentrationen hoch wetterecht.

Die Teilchengrößenverteilung der erfindungsgemäßen Pigmentzubereitung ist sehr schmalbandig, was ein wichtiges Kriterium für die Eignung in Colofiltern ist. Ein Maß für die Schmalbandigkeit der Teilchengrößenverteilung sind die Kenngrößen d₂₅, d₅₀ und d₉₅, die möglichst nah beieinander liegen sollten. Bevorzugt im Sinne der Erfindung sind Pigmentzubereitungen mit d₉₅ kleiner als 200 nm, insbesondere kleiner als 100 nm, mit d₅₀ kleiner als 100 nm, insbesondere kleiner als 50 nm, und mit d₂₅ kleiner als 80 nm, insbesondere kleiner als 45 nm.
Um zu besonders schmalbandigen Teilchengrößenverteilungen zu gelangen, z.B. d₉₅ kleiner als 60 nm und d₂₅ kleiner als 30 nm, kann die vorstehend beschriebene Nassmahlung auf einer Perlmühle mit einer vorgeschalteten Mahlung kombiniert werden, diese vorgeschaltete Mahlung ist bevorzugt eine Trockenmahlung, z.B. auf einer Schwingmühle.

Die erfindungsgemäße blaue Pigmentzubereitung kann einzeln oder in Kombination mit geeigneten organischen oder anorganischen Pigmenten, oder in Kombination mit Farbstoffen eingesetzt werden, und zwar als Mischung in der Dispersion (Color Filter Paste). Die Pigmentzubereitungen dienen entweder als Nuancierfarbmittel, die in Mengen von 1 Gew.-% bis 49 Gew.-% zugegeben werden können, wie z.B. beim Nuancieren von Pigment Blue 15, oder die Pigmentzubereitungen sind die Hauptkomponenten.
Als organische Pigmente kommen prinzipiell alle Monoazo-, Disazo-, verlackte Azo-, β-Naphthol-, Naphthol AS-, Benzimidazolon-, Disazokondensations-, Azo-Metallkomplex-Pigmente und polycyclische Pigmente wie zum Beispiel Phthalocyanin-, Chinacridon-, Perylen-, Perinon-, Thioindigo-, Anthrathron-, Anthrachinon-, Flavanthron, Indanthron-, Isoviolanthron-, Pyranthron-, Dioxazin-, Chinophthalon-, Isoindolinon-, Isoindolin- und Diketopyrrolopyrrol-Pigmente oder Ruße in Betracht.
Insbesondere eignen sich auch oberflächenmodifizierte Pigmente, deren Oberfläche durch chemische Prozesse wie beispielsweise Sulfonierung oder Diazotierung verändert und mit funktionellen, gegebenenfalls ladungstragenden Gruppen oder Polymerketten versehen wurde (in der englischsprachigen Literatur als self-dispersing bzw. graft pigments bezeichnet).
Geeignete anorganische Pigmente sind beispielsweise Titandioxide, Zinksulfide, Eisenoxide, Chromoxide, Ultramarin, Nickel- oder Chromantimontitanoxide, Cobaltoxide sowie Bismutvanadate.
Als organische Farbstoffe kommen bevorzugt lösemittellösliche Farbstoffe, wie Solvent Dyes und Fettfarbstoffe, aber auch Säurefarbstoffe, Direktfarbstoffe, Schwefelfarbstoffe und deren Leukoform, Metallkomplexfarbstoffe oder Reaktivfarbstoffe in Betracht, wobei im Falle der Reaktivfarbstoffe auch mit Nukleophilen abreagierte Farbstoffe eingesetzt werden können.

Als beispielhafte Auswahl besonders bevorzugter organischer Pigmente sind dabei Rußpigmente, wie z.B. Gas- oder Furnaceruße; Monoazo- und Disazopigmente, insbesondere die Colour Index Pigmente, einzeln oder in Kombination, wie z.B.:
Pigment Red 2, Pigment Red 3, Pigment Red 4, Pigment Red 5, Pigment Red 9, Pigment Red 12, Pigment Red 14, Pigment Red 38, Pigment Red 48:2, Pigment Red 48:3, Pigment Red 48:4, Pigment Red 53:1, Pigment Red 57:1, Pigment Red 112, Pigment Red 122, Pigment Red 144, Pigment Red 146, Pigment Red 147, Pigment Red 149, Pigment Red 168, Pigment Red 169, Pigment Red 170, Pigment Red 175, Pigment Red 176, Pigment Red 177, Pigment Red 179, Pigment Red 181, Pigment Red 184, Pigment Red 185, Pigment Red 187, Pigment Red 188, Pigment Red 207, Pigment Red 208, Pigment Red 209, Pigment Red 210, Pigment Red 214, Pigment Red 242, Pigment Red 247, Pigment Red 253, Pigment Red 254, Pigment Red 256, Pigment Red 257, Pigment Red 262, Pigment Red 263, Pigment Red 266, Pigment Red 269, Pigment Red 274, Pigment Violet 19 oder Pigment Violet 37, Pigment Yellow 1, Pigment Yellow 3, Pigment Yellow 12, Pigment Yellow 13, Pigment Yellow 14, Pigment Yellow 16, Pigment Yellow 17, Pigment Yellow 73, Pigment Yellow 74, Pigment Yellow 81, Pigment Yellow 83, Pigment Yellow 87, Pigment Yellow 97, Pigment Yellow 111, Pigment Yellow 120, Pigment Yellow 126, Pigment Yellow 127, Pigment Yellow 128, Pigment Yellow 139, Pigment Yellow 151, Pigment Yellow 154, Pigment Yellow 155, Pigment Yellow 173, Pigment Yellow 174, Pigment Yellow 175, Pigment Yellow 176, Pigment Yellow 180, Pigment Yellow 181, Pigment Yellow 191, Pigment Yellow 194, Pigment Yellow 196, Pigment Yellow 213, Pigment Yellow 214;
Pigment Orange 5, Pigment Orange 13, Pigment Orange 34, Pigment Orange 36, Pigment Orange 38, Pigment Orange 43, Pigment Orange 62, Pigment Orange 68, Pigment Orange 70, Pigment Orange 72 oder Pigment Orange 74; Pigment Green 7 oder Pigment Green 36 Pigment Blue 15, Pigment Blue 15:1, Pigment Blue 15:2, Pigment Blue 15:3, Pigment Blue 15:4, Pigment Blue 15:6, Pigment Blue 16, Pigment Blue 56, Pigment Blue 60 oder Pigment Blue 61.

Bevorzugt werden die erfindungsgemäßen Pigmentzubereitungen zum Nuancieren von Grün-, Blau- und Rot-Pigmenten eingesetzt.
Besonders bevorzugt sind Kombinationen der erfindungsgemäßen Pigmentzubereitung mit C.I. Pigment Blue 15:6 und/oder mit C.I. Pigment Violet 23.

Die erfindungsgemäße Pigmentzubereitung ist hochtransparent, weist selbst in geringen Konzentrationen eine exzellente Wetterechtheit auf und besitzt eine ausreichend hohe Farbstärke.

Zur Beurteilung der Eigenschaften der Pigmente auf dem Lacksektor in wasserfreien, lösemittelbasierenden Lacksystemen wurden aus der Vielzahl der bekannten Lacke ein Alkyd-Melaminharz-Lack auf Basis eines mittelöligen Alkydharzes und eines butanolveretherten Melaminharzes (AM) und ein High-Solid-Acrylharzeinbrennlack auf Basis einer nichtwässrigen Suspension (HSS) sowie ein hochpolarer, wässriger Polyurethanlack (WBL) ausgewählt.

Die Bestimmung der coloristischen Eigenschaften erfolgte nach DIN 55986.
Die Rheologie des Mahlguts nach der Dispergierung (millbase-Rheologie) wurde visuell anhand der folgenden fünfstufigen Skala bewertet.
- 5: dünnflüssig
- 4: flüssig
- 3: dickflüssig
- 2: leicht gestockt
- 1: gestockt

Die Bestimmung der Viskosität erfolgte nach dem Verdünnen des Mahlguts auf die Pigmentendkonzentration mit dem Viskospatel nach Rossmann, Typ 301 der Firma Erichsen.

In den nachstehenden Beispielen bedeuten Teile Gewichtsteile.

### Vergleichsbeispiel A:

In einer gerührten Vorlage werden 400 Teile Rohpigment (Pigment Blau 80) in 4 Liter Wasser vorgelegt. Diese Suspension wird in einer Rührwerkskugelmühle vom Typ Drais DCP SF 12 (Hersteller: Draiswerke GmbH, Mannheim), die mit 2200 Teilen Zirkoniummischoxidperlen vom Durchmesser 0,3 bis 0,4 mm als Mahlkörper gefüllt ist, mit einer Rührwerksumfanggeschwindigkeit von 11,8 m/s sowie einer spezifischen Leistungsdichte von 2,0 kW pro Liter Mahlraum betrieben und auf eine Verweildauer von 20 Minuten bei 20 °C gemahlen.
Zu 200 Teilen der Mahlsuspension fügt man 143 Teile iso-Butanol. Nach mehrstündigem Rühren bei Siedetemperatur wird der Alkohol durch Wasserdampfdestillation entfernt, die Suspension abgesaugt, der Presskuchen gewaschen und bei 80°C getrocknet. Es werden 17,0 Teile Pigment erhalten. Die Pigmentzubereitung wird über eine Stiftmühle gemahlen. Man erhält ein gut kristallines Pulver, das bei der Ausprüfung in AM-Lack sehr trübe, sehr farbschwache Lackierungen liefert. Die Rheologie der Lackfarbe wird mit Note 5 eingestuft.

### Vergleichsbeispiel B:

In einer gerührten Vorlage werden 348 Teile Rohpigment (Pigment Blau 80), 52 Teile eines Pigmentdispergators (JP 2005 049 636 A, Verbindung A-48) und 20 Teile NaOH 10 %ig in insgesamt 4 Liter Wasser vorgelegt. Diese Suspension wird in einer Rührwerkskugelmühle vom Typ Drais DCP SF 12 (Hersteller:
Draiswerke GmbH, Mannheim), die mit 2200 Teilen Zirkoniummischoxidperlen vom Durchmesser 0,3 bis 0,4 mm als Mahlkörper gefüllt ist und mit einer Rührwerksumfanggeschwindigkeit von 11,8 m/s sowie einer spezifischen Leistungsdichte von 2,0 kW pro Liter Mahlraum betrieben wird, auf eine Verweildauer von 15 Minuten bei 20 bis 50°C gemahlen.
Zu 150 Teilen der Mahlsuspension fügt man 124 Teile iso-Butanol. Nach mehrstündigem Rühren bei Siedetemperatur wird der Alkohol durch Wasserdampfdestillation entfernt, die Suspension abgesaugt, der Presskuchen gewaschen und bei 80°C getrocknet. Es werden 14,6 Teile Pigmentzubereitung erhalten. Die Pigmentzubereitung wird über eine Stiftmühle gemahlen. Man erhält ein gut kristallines Pulver, das bei der Ausprüfung in HSS-Lack im Vollton extrem deckende Lackierungen liefert.

### Beispiel 1

In einer gerührten Vorlage werden 348 Teile Rohpigment (Pigment Blau 80) und 52 Teile des Pigmentdispergators (IV) mit m gleich 1 in 4 Liter Wasser vorgelegt. Diese Suspension wird in einer Rührwerkskugelmühle vom Typ Drais DCP SF 12 (Hersteller: Draiswerke GmbH, Mannheim), die mit 2200 Teilen Zirkoniummischoxidperlen vom Durchmesser 0,3 bis 0,4 mm als Mahlkörper gefüllt ist und mit einer Rührwerksumfanggeschwindigkeit von 11,8 m/s sowie einer spezifischen Leistungsdichte von 2,0 kW pro Liter Mahlraum betrieben wird, auf eine Verweildauer von 15 Minuten bei 20 bis 50°C gemahlen.
Zu 200 Teilen der Mahlsuspension fügt man 143 Teile iso-Butanol. Nach mehrstündigem Rühren bei Siedetemperatur wird der Alkohol durch Wasserdampfdestillation entfernt, die Suspension abgesaugt, der Presskuchen gewaschen und bei 80°C getrocknet. Es werden 17,4 Teile Pigmentzubereitung erhalten. Die Pigmentzubereitung wird über eine Stiftmühle gemahlen. Man erhält ein gut kristallines Pulver, das bei der Ausprüfung in AM-Lack sehr reine, farbstarke Lackierungen liefert. Die Rheologie der Lackfarbe wird mit Note 5 eingestuft.

### Beispiel 2

In einer gerührten Vorlage werden 348 Teile Rohpigment (Pigment Blau 80), 52 Teile des Pigmentdispergators (IV) mit m gleich 1 und 270 Teile NaOH 10 %ig in insgesamt 4 Liter Wasser vorgelegt. Diese Suspension wird in einer Rührwerkskugelmühle vom Typ Drais DCP SF 12 (Hersteller: Draiswerke GmbH, Mannheim), die mit 2200 Teilen Zirkoniummischoxidperlen vom Durchmesser 0,3 bis 0,4 mm als Mahlkörper gefüllt ist und mit einer Rührwerksumfanggeschwindigkeit von 11,8 m/s sowie einer spezifischen Leistungsdichte von 2,0 kW pro Liter Mahlraum betrieben wird, auf eine Verweildauer von 15 Minuten bei 20 bis 50°C gemahlen.
Zu 200 Teilen der Mahlsuspension fügt man 143 Teile iso-Butanol. Nach mehrstündigem Rühren bei Siedetemperatur wird der Alkohol durch Wasserdampfdestillation entfernt, die Suspension abgesaugt, der Presskuchen gewaschen und bei 80°C getrocknet. Es werden 17,4 Teile Pigmentzubereitung erhalten. Die Pigmentzubereitung wird über eine Stiftmühle gemahlen. Man erhält ein gut kristallines Pulver, das bei der Ausprüfung in HSS-Lack sehr reine, farbstarke, im Vollton transparente Lackierungen liefert. Die Rheologie der Lackfarbe wird mit Note 4 eingestuft.

### Beispiel 3

In einer gerührten Vorlage werden 348 Teile Rohpigment (Pigment Blau 80), 52 Teile des Pigmentdispergators (IV) mit m gleich 1, 20 Teile eines handelsüblichen modifizierten Polyacrylates und 300 Teile NaOH 10 %ig in insgesamt 4 Liter Wasser vorgelegt. Diese Suspension wird in einer Rührwerkskugelmühle vom Typ Drais DCP SF 12 (Hersteller: Draiswerke GmbH, Mannheim), die mit 2200 Teilen Zirkoniummischoxidperlen vom Durchmesser 0,3 bis 0,4 mm als Mahlkörper gefüllt ist und mit einer Rührwerksumfanggeschwindigkeit von 11,8 m/s sowie einer spezifischen Leistungsdichte von 2,0 kW pro Liter Mahlraum betrieben wird, auf eine Verweildauer von 15 Minuten bei 20 bis 50°C gemahlen.
Zu 200 Teilen der Mahlsuspension fügt man 143 Teile iso-Butanol. Nach mehrstündigem Rühren bei Siedetemperatur wird der Alkohol durch Wasserdampfdestillation entfernt, die Suspension abgesaugt, der Presskuchen gewaschen und bei 80°C getrocknet. Es werden 17,6 Teile Pigmentzubereitung erhalten. Die Pigmentzubereitung wird über eine Stiftmühle gemahlen. Man erhält ein gut kristallines Pulver, das bei der Ausprüfung in HSS-Lack sehr reine, farbstarke, im Vollton transparente Lackierungen liefert. Die Rheologie der Lackfarbe wird mit Note 4 eingestuft.

### Beispiel 4

In einer gerührten Vorlage werden 348 Teile Rohpigment (Pigment Blau 80), 52 Teile des Pigmentdispergators (IV) mit m gleich 1, 36 Teile eines handelsüblichen Polyacrylat-Blockpolymeren und 330 Teile NaOH 10 %ig in insgesamt 4 Liter Wasser vorgelegt. Diese Suspension wird in einer Rührwerkskugelmühle vom Typ Drais DCP SF 12 (Hersteller: Draiswerke GmbH, Mannheim), die mit 2200 Teilen Zirkoniummischoxidperlen vom Durchmesser 0,3 bis 0,4 mm als Mahlkörper gefüllt ist und mit einer Rührwerksumfanggeschwindigkeit von 11,8 m/s sowie einer spezifischen Leistungsdichte von 2,0 kW pro Liter Mahlraum betrieben wird, auf eine Verweildauer von 15 Minuten bei 20 bis 50°C gemahlen.
Zu 200 Teilen der Mahlsuspension fügt man 143 Teile iso-Butanol. Nach mehrstündigem Rühren bei Siedetemperatur wird der Alkohol durch Wasserdampfdestillation entfernt, die Suspension abgesaugt, der Presskuchen gewaschen und bei 80°C getrocknet. Es werden 17,2 Teile Pigmentzubereitung erhalten. Die Pigmentzubereitung wird über eine Stiftmühle gemahlen. Man erhält ein gut kristallines Pulver, das bei der Ausprüfung in HSS-Lack sehr reine, farbstarke, im Vollton transparente Lackierungen liefert. Die Rheologie der Lackfarbe wird mit Note 4 eingestuft.
Die Untersuchung der Teilchengrößenverteilung der Primärteilchen liefert folgende Kenngrößen:
d₂₅ = 44 nm, d₅₀ = 56 nm, d₇₅ = 70 nm, d₉₅ = 101 nm. Länge zu Breite Verhältnis: 1,69:1

### Beispiel 5

In einer gerührten Vorlage werden 352 Teile Rohpigment (Pigment Blau 80), 46 Teile des Pigmentdispergators (IV) mit m gleich 1, 32 Teile eines handelsüblichen Polyacrylates, 12 Teile eines handelsüblichen modifizierten Polydimethylsiloxanes und 268 Teile NaOH 10 %ig in insgesamt 4 Liter Wasser vorgelegt. Diese Suspension wird in einer Rührwerkskugelmühle vom Typ Drais DCP SF 12 (Hersteller: Draiswerke GmbH, Mannheim), die mit 2200 Teilen Zirkoniummischoxidperlen vom Durchmesser 0,3-0,4 mm als Mahlkörper gefüllt ist und mit einer Rührwerksumfanggeschwindigkeit von 11,8 m/s sowie einer spezifischen Leistungsdichte von 2,0 kW pro Liter Mahlraum betrieben wird, auf eine Verweildauer von 15 Minuten bei 20 bis 50°C gemahlen.
Zu 200 Teilen der Mahlsuspension fügt man 143 Teile iso-Butanol. Nach mehrstündigem Rühren bei Siedetemperatur wird der Alkohol durch Wasserdampfdestillation entfernt, die Suspension abgesaugt, der Presskuchen gewaschen und bei 80°C getrocknet. Es werden 17.4 Teile Pigmentzubereitung erhalten. Die Pigmentzubereitung wird über eine Stiftmühle gemahlen. Man erhält ein gut kristallines Pulver, das bei der Ausprüfung in WBL-Lack sehr reine, farbstarke, im Vollton transparente Lackierungen liefert. Die Rheologie der Lackfarbe wird mit Note 4 eingestuft.

### Beispiel 6

In einer gerührten Vorlage werden 354 Teile Rohpigment (Pigment Blau 80), 46 Teile des Pigmentdispergators (IV)) mit m gleich 1, 32 Teile eines handelsüblichen Polyacrylates, 12 Teile eines handelsüblichen modifizierten Polydimethylsiloxanes und 70 Teile und 70 Teile NaOH 10 %ig in 4 Liter Wasser vorgelegt. Diese Suspension wird in einer Rührwerkskugelmühle vom Typ Drais DCP SF 12 (Hersteller: Draiswerke GmbH, Mannheim), die mit 2200 Teilen Zirkoniummischoxidperlen vom Durchmesser 0,3-0,4 mm als Mahlkörper gefüllt ist und mit einer Rührwerksumfanggeschwindigkeit von 11,8 m/s sowie einer spezifischen Leistungsdichte von 2,0 kW pro Liter Mahlraum betrieben wird, auf eine Verweildauer von 15 Minuten bei 20 bis 50°C gemahlen.
Zu 200 Teilen der Mahlsuspension fügt man 0,9 Teile eines Kondensationsproduktes auf Basis von Cyanurchlorid, Taurin, N,N'-Diethylaminopropylamin und p-Phenylendiamin und 143 Teile iso-Butanol. Nach mehrstündigem Rühren bei Siedetemperatur wird der Alkohol durch Wasserdampfdestillation entfernt, mit Ameisensäure auf pH 4, gestellt, die Suspension abgesaugt, der Presskuchen gewaschen und bei 80°C getrocknet. Es werden 18,3 Teile Pigmentzubereitung erhalten. Die Pigmentzubereitung wird über eine Stiftmühle gemahlen. Man erhält ein gut kristallines Pulver, das bei der Ausprüfung in WBL-Lack sehr reine, farbstarke, im Vollton transparente Lackierungen liefert. Die Rheologie der Lackfarbe wird mit Note 3 eingestuft.
Die Untersuchung der Teilchengrößenverteilung der Primärteilchen liefert folgende Kenngrößen:
d₂₅ = 42 nm, d₅₀ = 53 nm, d₇₅ = 67 nm, d₉₅ = 88 nm. Länge zu Breite Verhältnis: 1,65:1

### Beispiel 7

27 Teile grobkristallines Rohpigment (Pigment Blau 80) werden in ein zylindrisches 1-Liter-Kunststoffgefäß eingebracht, das mit 16 g wasserfreiem Natriumchlorid und 1400 Teilen Cylpebs (aus Korund, von 12 mm Durchmesser, Hersteller: Groß GmbH, Hof) als Mahlkörper gefüllt ist. Das Gemisch wird nun 8 Stunden lang unter Schütteln auf einer Schwingmühle (Typ Vibratom^{®} Hersteller: Siebtechnik Mühlheim) bei 1400 Umdrehungen pro Minute, Schwingkreis 4mm, fein vermahlen. Danach wird das Mahlgut von den Mahlkörpern abgesiebt. Man erhält 39 Teile Mahlgut.
Zu 35 Teilen des Mahlguts fügt man 350 Teile iso-Butanol und 2,1 Teile Pigmentdispergator (IV) mit m gleich 1. Nach mehrstündigem Rühren bei Siedetemperatur wird der Alkohol durch Wasserdampfdestillation entfernt, die Suspension abgesaugt, der Presskuchen gewaschen und bei 80°C getrocknet. Es werden 22,7 Teile Pigmentzubereitung erhalten. Die Pigmentzubereitung wird über eine Stiftmühle gemahlen. Man erhält ein gut kristallines Pulver, das bei der Ausprüfung in AM-Lack mäßig farbstarke Lackierungen liefert. Die Rheologie der Lackfarbe wird mit Note 5 eingestuft.

### Beispiel 8

27 Teile grobkristallines Rohpigment (Pigment Blau 80) und 3 Teile Pigmentdispergator (IV) mit m gleich 1 werden in ein zylindrisches 1-Liter-Kunststoffgefäß eingebracht, das mit 1400 Teilen Cylpebs (aus Korund, von 12°mm Durchmesser, Hersteller: Groß GmbH, Hof) als Mahlkörper gefüllt ist. Das Gemisch wird nun 8 Stunden lang unter Schütteln auf einer Schwingmühle (Typ Vibratom^{®} Hersteller: Siebtechnik Mühlheim) bei 1400 Umdrehungen pro Minute, Schwingkreis 4 mm, fein vermahlen. Danach wird das Mahlgut von den Mahlkörpern abgesiebt. Man erhält 29 Teile Mahlgut.
Zu 40,5 Teilen des Mahlguts fügt man 350 Teile iso-Butanol. Nach mehrstündigem Rühren bei Siedetemperatur wird der Alkohol durch Wasserdampfdestillation entfernt, die Suspension abgesaugt, der Presskuchen gewaschen und bei 80°C getrocknet. Es werden 27,4 Teile Pigmentzubereitung erhalten. Die Pigmentzubereitung wird über eine Stiftmühle gemahlen. Man erhält ein gut kristallines Pulver, das bei der Ausprüfung in AM-Lack farbstarke Lackierungen liefert. Die Rheologie der Lackfarbe wird mit Note 5 eingestuft. Die Untersuchung der Teilchengrößenverteilung der Primärteilchen liefert folgende Kenngrößen:
d₂₅ = 19 nm, d₅₀ = 24 nm, d₇₅ = 31 nm, d₉₅ = 43 nm. Länge zu Breite Verhältnis: 1,63:1

### Beispiel 9

In einen Kunststoffbehälter, der mit 17670 Teilen Edelstahlkugeln vom Durchmesser 10 mm als Mahlkörper zu 55 Vol.-% gefüllt ist, werden 210 Teile Rohpigment und 1050 g wasserfreiem Natriumsulfat gefüllt. Es wird 48 Stunden bei 75 % der kritischen Drehzahl auf einem Rolltisch gemahlen. Anschließend wird das Mahlgut von den Mahlkörpern abgesiebt, in Wasser angeschlämmt, abgesaugt, mit Wasser sulfatfrei gewaschen und bei 80°C getrocknet. Man erhält 207,4 Teile Mahlgut.

### Beispiel 10

Zu 54 Teilen des Mahlguts aus Beispiel 9 fügt man 200 Teile iso-Butanol sowie 2 Teile des Pigmentdispergators (IV) mit m gleich 1. Nach mehrstündigem Rühren bei Siedetemperatur wird der Alkohol durch Wasserdampfdestillation entfernt, die Suspension abgesaugt, der Presskuchen gewaschen und bei 80°C getrocknet. Es werden 21,2 Teile Pigmentzubereitung erhalten. Die Pigmentzubereitung wird über eine Stiftmühle gemahlen. Man erhält ein gut kristallines Pulver, das bei der Ausprüfung in AM-Lack farbstarke Lackierungen liefert. Die Rheologie der Lackfarbe wird mit Note 5 eingestuft.

### Beispiel 11

27 Teile grobkristallines Rohpigment (Pigment Blau 80) und 3 Teile Pigmentdispergator (IV) mit m gleich 1 werden in ein zylindrisches 1-Liter-Kunststoffgefäß eingebracht, das mit 1400 Teilen Cylpebs (aus Korund, von 12 mm Durchmesser, Hersteller: Groß GmbH, Hof) als Mahlkörper gefüllt ist. Das Gemisch wird nun 8 Stunden lang unter Schütteln auf einer Schwingmühle (Typ Vibratom^{®} Hersteller: Siebtechnik Mühlheim) bei 1400 Umdrehungen pro Minute, Schwingkreis 4 mm, fein vermahlen. Danach wird das Mahlgut von den Mahlkörpern abgesiebt. Man erhält 29 Teile Mahlgut.
In einer gerührten Vorlage werden 400 Teile des aus der Schwingmahlung erhaltenen Präpigments, 36 Teile eines handelsüblichen Polyacrylat-Blockpolymeren und 330 Teile NaOH 10 %ig in insgesamt 4 Liter Wasser vorgelegt. Diese Suspension wird in einer Rührwerkskugelmühle vom Typ Drais DCP SF 12 (Hersteller: Draiswerke GmbH, Mannheim), die mit 2200 Teilen Zirkoniummischoxidperlen vom Durchmesser 0,3 bis 0,4 mm als Mahlkörper gefüllt ist und mit einer Rührwerksumfanggeschwindigkeit von 11,8 m/s sowie einer spezifischen Leistungsdichte von 2,0 kW pro Liter Mahlraum betrieben wird, auf eine Verweildauer von 15 Minuten bei 20 bis 50°C gemahlen.
Zu 200 Teilen der Mahlsuspension fügt man 143 Teile iso-Butanol. Nach mehrstündigem Rühren bei Siedetemperatur wird der Alkohol durch Wasserdampfdestillation entfernt, die Suspension abgesaugt, der Presskuchen gewaschen und bei 80°C getrocknet. Es werden 17,2 Teile Pigmentzubereitung erhalten. Die Pigmentzubereitung wird über eine Stiftmühle gemahlen.
Man erhält ein gut kristallines Pulver, das bei der Ausprüfung in HSS-Lack sehr reine, farbstarke, im Vollton transparente Lackierungen liefert. Die Rheologie der Lackfarbe wird mit Note 5 eingestuft.
Die Untersuchung der Teilchengrößenverteilung der Primärteilchen liefert folgende Kenngrößen:
d₂₅ = 23 nm, d₅₀ = 27 nm, d₇₅ = 33 nm, d₉₅ = 47 nm. Länge zu Breite Verhältnis: 2,14:1

### Beispiel 12

450 Teile Natriumchlorid, 75 Teile grobkristallines Rohpigment (Pigment Blau 80), 8,3 Teile Pigmentdispergator (IV) mit m gleich 1 und 110 ml Diethylenglykol werden 8 Stunden bei 80°C geknetet. Die Knetmasse wird in 2500 Teilen 5 %iger wässriger Salzsäure 2 Stunden bei 40°C gerührt, die Suspension wird abgesaugt, der Presskuchen salzfrei gewaschen und getrocknet. Man erhält 82,3 Teile Pigmentzubereitung.
Die Rheologie der Lackfarbe wird mit Note 4-5 eingestuft.

Die Untersuchung der Teilchengrößenverteilung der Primärteilchen liefert folgende Kenngrößen:
d₂₅ = 44 nm, d₅₀ = 56 nm, d₇₅ = 69 nm, d₉₅ = 93 nm. Länge zu Breite Verhältnis: 1,78:1

### Beispiel 13

In einer gerührten Vorlage werden 348 Teile Rohpigment (Pigment Blau 80) und 52 Teile des Pigmentdispergators (IV) mit m gleich 1 und 338 Teile NaOH 10 %ig in 4 Liter Wasser vorgelegt. Diese Suspension wird in einer Rührwerkskugelmühle vom Typ Drais DCP SF 12 (Hersteller: Draiswerke GmbH, Mannheim), die mit 2200 Teilen Zirkoniummischoxidperlen vom Durchmesser 0,3 bis 0,4 mm als Mahlkörper gefüllt ist und mit einer Rührwerksumfanggeschwindigkeit von 11,8 m/s sowie einer spezifischen Leistungsdichte von 2,0 kW pro Liter Mahlraum betrieben wird, auf eine Verweildauer von 20 Minuten bei 20°C gemahlen.
Zu 276 Teilen der Mahlsuspension fügt man 253 Teile iso-Butanol. Nach mehrstündigem Rühren bei Siedetemperatur wird der Alkohol durch Wasserdampfdestillation entfernt, die Suspension abgesaugt, der Presskuchen gewaschen und bei 80°C getrocknet. Es werden 25,8 Teile Pigmentzubereitung erhalten. Die Pigmentzubereitung wird über eine Stiftmühle gemahlen. Man verhält ein gut kristallines Pulver, das bei der Ausprüfung in AM-Lack sehr reine, farbstarke Lackierungen liefert. Die Rheologie der Lackfarbe wird mit Note 3-4 eingestuft.
Die Untersuchung der Teilchengrößenverteilung der Primärteilchen liefert folgende Kenngrößen:
d₂₅ = 48 nm, d₅₀ = 71 nm, d₇₅ = 109 nm, d₉₅ = 158 nm. Länge zu Breite Verhältnis: 1,58:1

### Beispiel 14

In einer gerührten Vorlage werden 280 Teile Rohpigment (Pigment Blau 80) und 120 Teile des Pigmentdispergators (IV) mit m gleich 1 und 666 Teile NaOH 10°%ig in 4 Liter Wasser vorgelegt. Diese Suspension wird in einer Rührwerkskugelmühle vom Typ Drais DCP SF 12 (Hersteller: Draiswerke GmbH, Mannheim), die mit 2200 Teilen Zirkoniummischoxidperlen vom Durchmesser 0,3 bis 0,4 mm als Mahlkörper gefüllt ist und mit einer Rührwerksumfanggeschwindigkeit von 11,8 m/s sowie einer spezifischen Leistungsdichte von 2,0 kW pro Liter Mahlraum betrieben wird, auf eine Verweildauer von 20 Minuten bei 20°C gemahlen.
Zu 254 Teilen der Mahlsuspension fügt man 209 Teile iso-Butanol. Nach mehrstündigem Rühren bei Siedetemperatur wird der Alkohol durch Wasserdampfdestillation entfernt, die Suspension abgesaugt, der Presskuchen gewaschen und bei 80°C getrocknet. Es werden 19,7 Teile Pigmentzubereitung erhalten. Die Pigmentzubereitung wird über eine Stiftmühle gemahlen. Man erhält ein gut kristallines Pulver, das bei der Ausprüfung in AM-Lack sehr reine, farbstarke Lackierungen liefert. Die Rheologie der Lackfarbe wird mit Note 4 eingestuft.
Die Untersuchung der Teilchengrößenverteilung der Primärteilchen liefert folgende Kenngrößen:
d₂₅ = 26 nm, d₅₀ = 32 nm, d₇₅ = 42 nm, d₉₅ = 58 nm. Länge zu Breite Verhältnis: 1,93:1

### Beispiel 15

In einer gerührten Vorlage werden 348 Teile Rohpigment (Pigment Blau 80) und 52 Teile des Pigmentdispergators (IV) mit m gleich 1 und 381 Teile NaOH 10 %ig in 4 Liter Wasser vorgelegt. Diese Suspension wird in einer Rührwerkskugelmühle vom Typ Drais DCP SF 12 (Hersteller: Draiswerke GmbH, Mannheim), die mit 2200 Teilen Zirkoniummischoxidperlen vom Durchmesser 0,3 bis 0,4 mm als Mahlkörper gefüllt ist und mit einer Rührwerksumfanggeschwindigkeit von 11,8 m/s sowie einer spezifischen Leistungsdichte von 2,0 kW pro Liter Mahlraum betrieben wird, auf eine Verweildauer von 20 Minuten bei 65°C gemahlen.
Zu 244 Teilen der Mahlsuspension fügt man 207 Teile iso-Butanol. Nach mehrstündigem Rühren bei Siedetemperatur wird der Alkohol durch Wasserdampfdestillation entfernt, die Suspension abgesaugt, der Presskuchen gewaschen und bei 80°C getrocknet. Es werden 22,8 Teile Pigmentzubereitung erhalten. Die Pigmentzubereitung wird über eine Stiftmühle gemahlen. Man erhält ein gut kristallines Pulver, das bei der Ausprüfung in AM-Lack sehr reine, farbstarke Lackierungen liefert. Die Rheologie der Lackfarbe wird mit Note 3-4 eingestuft.
Die Untersuchung der Teilchengrößenverteilung der Primärteilchen liefert folgende Kenngrößen:
d₂₅ = 35 nm, d₅₀ = 46 nm, d₇₅ = 60 nm, d₉₅ = 103 nm. Länge zu Breite Verhältnis: 1,83:1

## Patentansprüche

1. Pigmentzubereitung, **gekennzeichnet durch** einen Gehalt an
a) einer Benzimidazolondioxazinverbindung der Formel (I) als Basispigment und 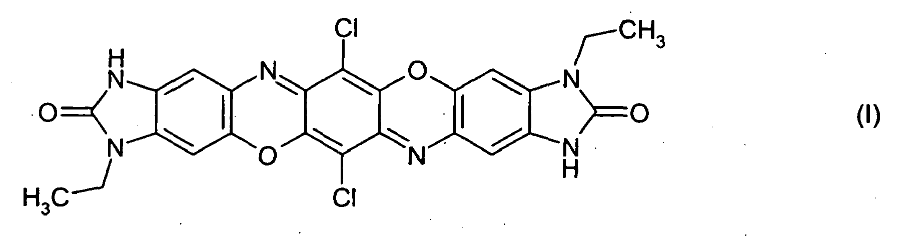
b) einer Dioxazinverbindung der allgemeinen Formel (IV) als Pigmentdispergator 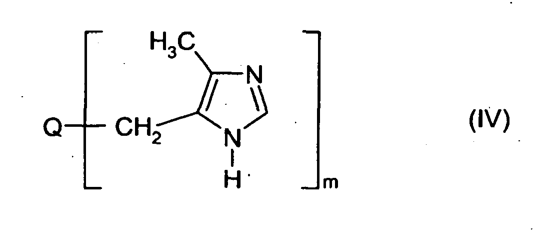
worin
Q für einen m-wertigen Rest einer Verbindung der Formel (III) steht, 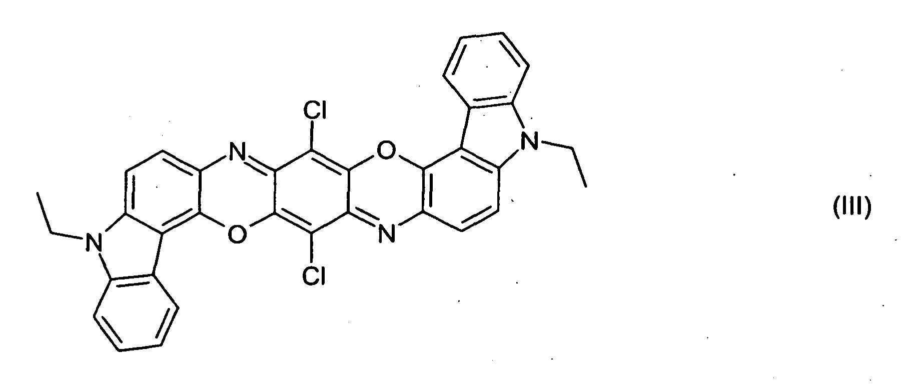
m eine Zahl von 1 bis 4 bedeutet.

2. Pigmentzubereitung nach Anspruch 1, **dadurch gekennzeichnet, dass** m eine Zahl von 1 bis 2 ist.

3. Pigmentzubereitung nach Anspruch 1 oder 2, enthaltend 0,5 bis 99 Gew.-% an Pigmentdispergator der Formel (IV), bezogen auf das Gewicht des Basispigments der Formel (I).

4. Pigmentzubereitung nach einem oder mehreren der Ansprüche 1 bis 3, enthaltend 2,5 bis 50 Gew.-% an Pigmentdispergator der Formel (IV), bezogen auf das Gewicht des Basispigments der Formel (I).

5. Pigmentzubereitung nach einem oder mehreren der Ansprüche 1 bis 4, **gekennzeichnet durch** d₉₅ kleiner als 200 nm, mit d₅₀ kleiner als 100 nm und mit d₂₅ kleiner als 80 nm.

6. Pigmentzubereitung nach einem oder mehreren der Ansprüche 1 bis 4, **gekennzeichnet durch** d₉₅ kleiner als 100 nm, mit d₅₀ kleiner als 50 nm, und mit d₂₅ kleiner als 45 nm.

7. Pigmentzubereitung nach einem oder mehreren der Ansprüche 1 bis 6, enthaltend Hilfsmittel oder Zusatzstoffe aus der Gruppe der Tenside, nichtpigmentären und pigmentären Dispergiermittel, Füllstoffe, Stellmittel, Harze, Wachse, Entschäumer, Antistaubmittel, Extender, Antistatika, Farbmittel zum Nuancieren, Konservierungsmittel, Trocknungsverzögerungsmittel, Additive zur Steuerung der Rheologie, Netzmittel, Antioxidantien, Biocide, UV-Absorber und Lichtstabilisatoren, vorzugsweise in einer Menge von 0,1 bis 60 Gew.-%, bezogen auf das Gesamtgewicht der Pigmentzubereitung.

8. Verfahren zur Herstellung einer Pigmentzubereitung nach einem oder mehreren der Ansprüche 1 bis 7, **dadurch gekennzeichnet, dass** man den Pigmentdispergator der Formel (IV) und die Benzimidazolondioxazinverbindung der Formel (I) miteinander mischt oder an einem beliebigen Zeitpunkt ihres Herstellungsprozesses aufeinander einwirken lässt.

9. Verwendung der Pigmentzubereitung nach einem oder mehreren der Ansprüche 1 bis 7 zum Pigmentieren von hochmolekularen organischen Materialien, Farbfiltern, elektrophotographischen Tonern und Entwicklern und e-inks.

10. Verwendung nach Anspruch 9, **dadurch gekennzeichnet, dass** das hochmolekulare organische Material ein Kunststoff, Lack, Anstrichfarbe oder Tinte ist.

11. Verwendung nach Anspruch 9 oder 10 zum Pigmentieren von Metallic-Lacken.

12. Hochmolekulares organisches Material, enthaltend eine färberisch wirksame Menge einer Pigmentzubereitung nach einem oder mehreren der Ansprüche 1 bis 7.

13. Farbfilter, enthaltend eine färberisch wirksame Menge einer Pigmentzubereitung nach einem oder mehreren der Ansprüche 1 bis 7.

## Claims

1. A pigment preparation comprising
a) a benzimidazolonedioxazine compound of formula (I) as base pigment 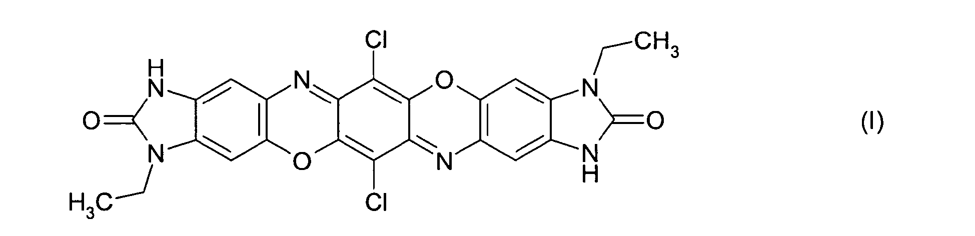 and
b) a dioxazine compound of the general formula (IV) as pigment dispersant 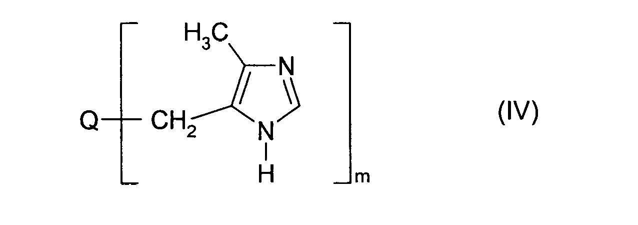
where
Q represents an m-valent radical of a compound of formula (III), 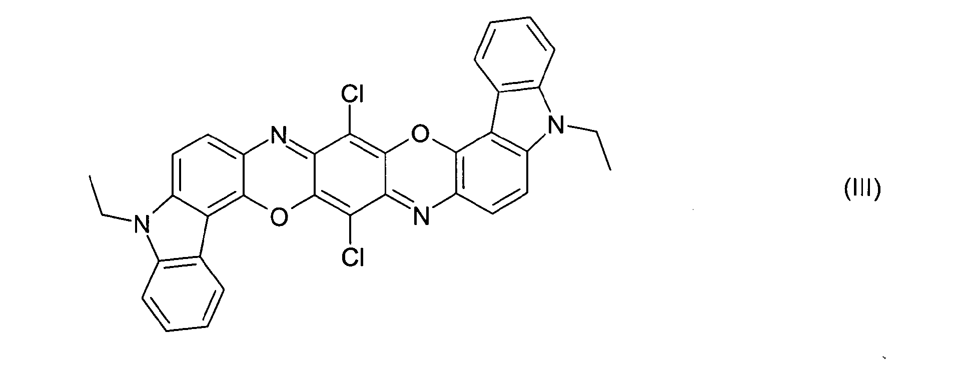
m represents a number from 1 to 4.

2. A pigment preparation as claimed in claim 1, wherein m is a number from 1 to 2.

3. A pigment preparation as claimed in claim 1 or 2, containing 0.5% to 99% by weight of pigment dispersant of formula (IV), based on the weight of the base pigment of formula (I).

4. A pigment preparation as claimed in one or more of claims 1 to 3, containing 2.5% to 50% by weight of pigment dispersant of formula (IV), based on the weight of the base pigment of formula (I).

5. A pigment preparation as claimed in one or more of claims 1 to 4, **characterized by** d₉₅ less than 200 nm, d₅₀ less than 100 nm and d₂₅ less than 80 nm.

6. A pigment preparation as claimed in one or more of claims 1 to 4, **characterized by** d₉₅ less than 100 nm, d₅₀ less than 50 nm, and d₂₅ less than 45 nm.

7. A pigment preparation as claimed in one or more of claims 1 to 6, containing auxiliaries or adjuncts selected from the group consisting of surfactants, pigmentary and nonpigmentary dispersants, fillers, standardizers, resins, waxes, defoamers, antidusters, extenders, antistats, shading colorants, preservatives, drying retarders, rheology control additives, wetting agents, antioxidants, biocides, UV-absorbers and photostabilizers, preferably in an amount of 0.1% to 60% by weight, based on the total weight of the pigment preparation.

8. A process for manufacturing a pigment preparation as claimed in one or more of claims 1 to 7, which comprises the pigment dispersant of formula (IV) and the benzimidazolonedioxazine compound of formula (I) being mixed with each other or being allowed to act on each other at any stage of their manufacturing operation.

9. The use of the pigment preparation of one or more of claims 1 to 7 for pigmenting macromolecular organic materials, color filters, electrophotographic toners and developers and e-inks.

10. The use as claimed in claim 9, wherein the macromolecular organic material is a plastic, coating, paint or liquid ink.

11. The use as claimed in claim 9 or 10 for pigmenting metallic paint systems.

12. A macromolecular organic material containing a coloristically effective amount of a pigment preparation as claimed in one or more of claims 1 to 7.

13. A color filter containing a coloristically effective amount of a pigment preparation as claimed in one or more of claims 1 to 7.

## Revendications

1. Composition de pigment, **caractérisée par** une teneur en
a) un composé benzimidazolone-dioxazine de formule (I) en tant que pigment de base 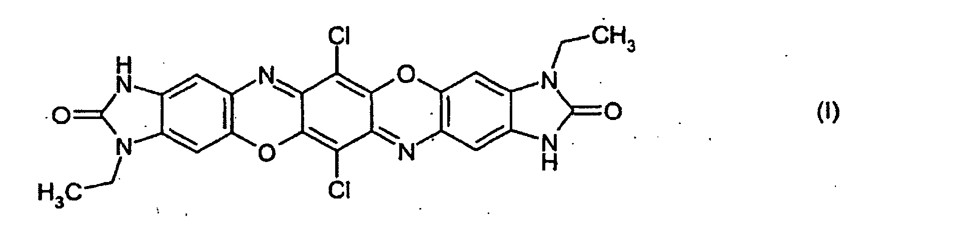 et
b) un composé dioxazine de formule générale (IV) en tant que dispersant pigmentaire 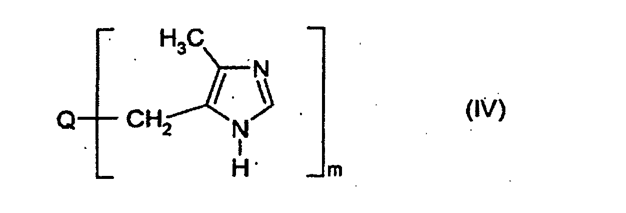
formule dans laquelle
Q représente un reste m-valent d'un composé de formule (III) 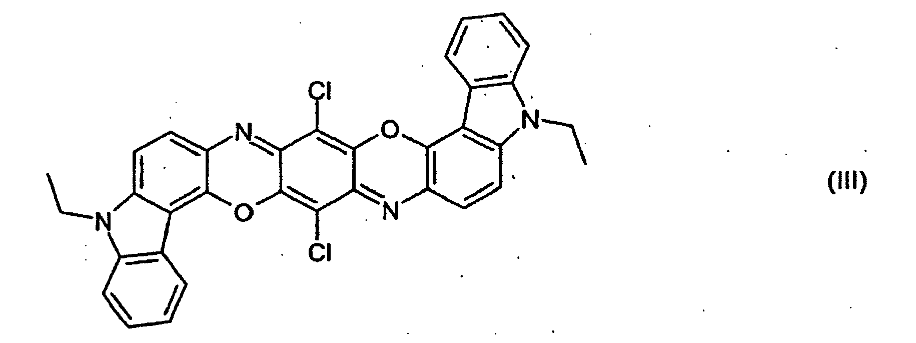
m représente un nombre allant de 1 à 4.

2. Composition de pigment selon la revendication 1, **caractérisée en ce que** m est un nombre allant de 1 à 2.

3. Composition de pigment selon la revendication 1 ou 2, contenant de 0,5 à 99 % en poids de dispersant pigmentaire se formule (IV), par rapport au poids du pigment de base de formule (I).

4. Composition de pigment selon une ou plusieurs des revendications 1 à 3, contenant de 2,5 à 50 % en poids de dispersant pigmentaire se formule (IV), par rapport au poids du pigment de base de formule (I).

5. Composition de pigment selon une ou plusieurs des revendications 1 à 4, **caractérisée en ce que** la valeur d₉₅ est inférieure à 200 nm, avec d₅₀ inférieure à 100 nm et avec d₂₅ inférieure à 80 nm.

6. Composition de pigment selon une ou plusieurs des revendications 1 à 4, **caractérisée en ce que** la valeur d₉₅ est inférieure à 100 nm, avec d₅₀ inférieure à 50 nm et avec d₂₅ inférieure à 45 nm.

7. Composition de pigment selon une ou plusieurs des revendications 1 à 6, contenant des adjuvants ou additifs choisis dans le groupe des tensioactifs, des dispersants pigmentaires ou non pigmentaires, des charges, des fixateurs, des résines, des cires, des antimousses, des agents anti-poussière, des extendeurs, des agents antistatiques, des agents colorants pour le nuançage, des conservateurs, des retardateurs de séchage, des additifs pour l'ajustement de la rhéologie, des agents mouillants, des antioxydants, des biocides, des absorbeurs UV et des photoprotecteurs, de préférence en une quantité de 0,1 à 60 % en poids, par rapport au poids total de la composition de pigment.

8. Procédé pour la préparation d'une composition de pigment selon une ou plusieurs des revendications 1 à 7, **caractérisé en ce qu'**on mélange l'un avec l'autre ou on laisse agir l'un sur l'autre à un moment quelconque de son processus de préparation le dispersant pigmentaire de formule (IV) et le composé benzimidazolone-dioxazine de formule (I).

9. Utilisation de la composition de pigment selon une ou plusieurs des revendications 1 à 7, pour la pigmentation de matières organiques de masse moléculaire élevée, de filtres colorés, de toners et développeurs électrophotographiques et d'encres électroniques.

10. Utilisation selon la revendication 9, **caractérisée en ce que** la matière organique de masse moléculaire élevée est une matière plastique, un vernis, une peinture ou une encre.

11. Utilisation selon la revendication 9 ou 10, pour la pigmentation de peintures métallisées.

12. Matière organique de masse moléculaire élevée, contenant une quantité coloristiquement efficace d'une composition de pigment selon une ou plusieurs des revendications 1 à 7.

13. Filtre coloré, contenant une quantité coloristiquement efficace d'une composition de pigment selon une ou plusieurs des revendications 1 à 7.
